# EUROPÄISCHE PATENTSCHRIFT

(11) **EP 1 612 689 B1**
(45) Veröffentlichungstag und Bekanntmachung des Hinweises auf die Patenterteilung: **26.12.2007**
(21) Anmeldenummer: 04015369.4
(22) Anmeldetag: 30.06.2004
(51) Int. Cl.: G06F 13/40, G06F 12/06, G05B 19/042

(54) **Steckplatzerkennung in einem Bussystem**
Identification of slots in a bus system
Identification d'emplacements dans un système de bus

(43) Veröffentlichungstag der Anmeldung: 04.01.2006
(73) Patentinhaber: SIEMENS AKTIENGESELLSCHAFT, 80333 München (DE)
(72) Erfinder: Grosser, Stefan, 92253 Schnaittenbach (DE); Hirmer, Gerald, 92708 Mantel (DE); Maier, Mario, 92266 Ensdorf (DE)

(56) Entgegenhaltungen:
- WO-A-03/094001
- DE-C- 19 742 179
- US-A- 6 065 068
- US-A1- 2004 078 097

## Beschreibung

Die Erfindung betrifft ein Bussystem mit Steckplätzen zur Aufnahme von Baugruppen, wobei jedem Steckplatz eine Adresse zugeordnet ist, sowie eine Baugruppe, die zur Aufnahme an einem der Steckplätze eines solchen Bussystems geeignet ist.

Ein solches Bussystem mit Steckplätzen zur Aufnahme von Baugruppen kann Teil einer speicherprogrammierbaren Steuerung in einem Automatisierungssystem, insbesondere einem industriellen Automatisierungssystem, sein. Ein solches Bussystem hat üblicherweise die Eigenschaft, dass Baugruppen herausgezogen werden können, ohne dass der Busverkehr zu den anderen Baugruppen des Bussystems unterbrochen wird. Um das zu erreichen, verwendet man eine Backplane mit Steckplätzen, in die alle Baugruppen hineingesteckt werden. Auf der Backplane verlaufen die Busleitungen, an welche die Baugruppen parallel angeschlossen werden. Von einem Teilnehmer am Busverkehr, z.B. einer Zentraleinheit (CPU = Central Processing Unit) können Daten über den Bus versendet werden. Solche Daten werden von allen an den Bus angeschlossenen Baugruppen empfangen.

Sind die Daten nur für eine der empfangenen Baugruppen relevant, so muss diese Baugruppe einzeln adressierbar sein. Daher wird üblicherweise den einzelnen Steckplätzen jeweils eine im Bussystem eindeutige Adresse zugeordnet. Eine Baugruppe, welche an einem Steckplatz mit einer zugewiesenen Adresse angeschlossen ist, kann somit über diese Adresse adressiert werden. Ein von einem Teilnehmer gesendetes, für die jeweilige Baugruppe bestimmtes Datenpaket enthält somit neben den Nutzdaten auch eine Information über die Adresse des Steckplatzes bzw. der Baugruppe, welche von der jeweiligen Baugruppe erkannt wird. Einer Baugruppe auf einem bestimmten Steckplatz muss zuvor jedoch mitgeteilt werden, dass sie der Teilnehmer mit der jeweiligen Adresse ist, damit sie darauf reagieren kann, wenn Daten auf dem Bus versendet werden, in denen die jeweilige Empfängeradresse eingetragen ist.

Für das Problem der Steckplatzerkennung bzw. Adresseinstellung gibt es verschiedene Lösungsmöglichkeiten. So sind manuelle Adressschalter auf der Baugruppe oder die Taufe der Baugruppe im Werk oder beim Kunden üblich. Weitere bekannte Lösungen verwenden eine Adressauswahlleitung auf dem Bus, eine durch die Baugruppen durchgeschliffene Busleitung oder Konfigurationspins auf dem Bus. Diese Lösungen weisen verschiedene Nachteile auf. So verlangen sie teilweise vom Anwender eine fehlerträchtige Aktion, verursachen erhöhte Softwareaufwendungen in der Zentraleinheit, benötigen zusätzliche Steckerpins oder verursachen generell zusätzliche Kosten.

Aus der US 2004/0078097 ist eine Erkennung von an einer zentralen Kontrolleinheit angeschlossenen Peripheriegeräten mittels eines durch Spannungsteilung veränderbaren elektrischen Signals bekannt.

Der Erfindung liegt die Aufgabe zugrunde, eine einfache, automatische Steckplatzerkennung zu ermöglichen.

Diese Aufgabe wird durch ein Bussystem gemäß Patentanspruch 1 sowie durch eine Baugruppe gemäß Patentanspruch 7 gelöst. Das erfindungsgemäße Bussystem weist Steckplätze zur Aufnahme von Baugruppen auf, wobei zur Zuordnung von jeweils einer Adresse zu einem Steckplatz den Steckplätzen ein durch eine an dem jeweiligen Steckplatz aufgenommene Baugruppe abgreifbares elektrisches Signal zuführbar ist, wobei aus dem Wert einer physikalischen Größe des Signals eine Adresse des jeweiligen Steckplatzes eindeutig ermittelbar ist. Die erfindungsgemäße Baugruppe ist zur Aufnahme an mindestens einem der Steckplätze eines solchen Bussystems geeignet, wobei die Baugruppe Auswertemittel zur Auswertung des Werts der physikalischen Größe des Signals und zur Zuordnung einer Adresse in Abhängigkeit vom Ergebnis der Auswertung des Werts aufweist.

Die erfindungsgemäße Lösung ermöglicht es den Baugruppen, den Steckplatz bzw. die Adresse des Steckplatzes, an welchem sie aufgenommen werden, selbstständig zu erkennen. Im Unterschied zum Stand der Technik ist weder eine manuelle Adresseinstellung erforderlich, noch müssen in der Zentraleinheit Softwaremechanismen zur Adressübertragung in die Baugruppe ablaufen. Zudem ist nur eine einzige zusätzliche Leitung am Bus notwendig, welche zur Zuführung des Signals verwendet wird. Die Steckplatzdetektion kann somit anhand des Werts einer physikalischen Größe des Signals automatisch und damit besonders fehlersicher erfolgen.

Gemäß einer vorteilhaften Ausgestaltung der Erfindung ist das Signal den Steckplätzen derart zuführbar, dass der Wert der physikalischen Größe des Signals an jedem Steckplatz unterschiedlich ist. Dies bietet den Vorteil, dass jedem einzelnen Steckplatz eine zumindest im Bussystem eindeutige Adresse zugeordnet werden kann, wobei sich diese Adresse aus einer vorbestimmten Zuordnung vom jeweiligen Wert der physikalischen Größe zu einer jeweiligen Adresse ergibt.

Gemäß einer weiteren vorteilhaften Ausgestaltung der Erfindung ist das Signal ein periodisches Signal und ist die physikalische Größe die Frequenz dieses Signals. Gemäß einer weiteren vorteilhaften Ausgestaltung der Erfindung ist das periodische Signal ein Rechtecksignal. Die Frequenz des Signals lässt sich besonders leicht auswerten. Um jedem Steckplatz eine eindeutige Adresse zuweisen zu können, wird gemäß einer weiteren vorteilhaften Ausgestaltung der Erfindung vorgeschlagen, dass das Signal derart zuführbar ist, dass die Frequenz des Signals an jedem Steckplatz ein unterschiedlicher Quotient einer Grundfrequenz ist. Eine solche Frequenzteilung ist mit relativ geringem Hardwareaufwand zu realisieren.

Gemäß einer weiteren vorteilhaften Ausgestaltung der Erfindung ist das Signal ein Gleichspannungssignal und ist die physikalische Größe die Spannung des Signals. Auch die Spannung eines Signals lässt sich auf einfache Art und Weise auswerten sowie gemäß einer weiteren vorteilhaften Ausgestaltung der Erfindung derart herunterteilen, dass die Spannung des Signals an jedem Steckplatz ein unterschiedlicher Quotient einer Grundspannung ist.

Die erfindungsgemäße Baugruppe weist vorteilhafterweise Auswertemittel zur Auswertung der Frequenz bzw. der Spannung des Signals auf. Die Auswertemittel zur Auswertung der Spannung können als Analogwandler oder als Spannungsteilernetzwerk mit nachgeschalteten Komparatoren ausgebildet sein. Vorteilhafterweise werden die Auswertemittel als anwenderspezifisch integrierte Schaltung (ASIC) ausgeführt.

Vorteilhafterweise wird ein solches Bussystem innerhalb einer speicherprogrammierbaren Steuerung bzw. eines Automatisierungssystems, insbesondere eines industriellen Automatisierungssystems, eingesetzt.

Nachfolgend wird die Erfindung anhand der in den Figuren dargestellten Ausführungsbeispiele näher beschrieben und erläutert.

Es zeigen:
- FIG 1: ein Bussystem mit Steckplätzen zur Aufnahme von Baugruppen,
- FIG 2: ein Bussystem, bei welchem den Steckplätzen eine periodisches Signal zugeführt wird,
- FIG 3: ein Bussystem, bei welchem den Steckplätzen ein Gleichspannungssignal zugeführt wird und
- FIG 4: eine Schaltungsanordnung für die Erkennung von drei Steckplätzen.

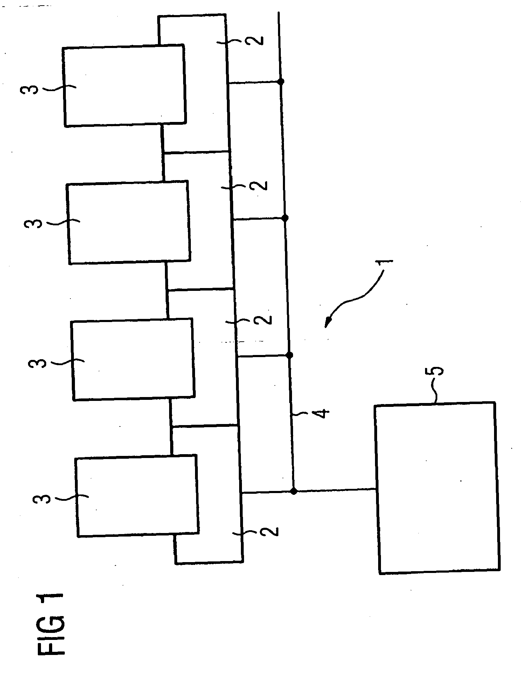

Figur 1 zeigt ein Bussystem 1 mit Steckplätzen 2 zur Aufnahme von Baugruppen 3. Die Steckplätze 2 und somit auch die in den Steckplätzen 2 aufgenommenen Baugruppen 3 sind über Busleitungen 4 miteinander verbunden. Eine Zentraleinheit 5 (CPU) ist ebenfalls an die Busleitungen 4 angeschlossen. Die Gesamtheit der Busleitungen 4 wird als Bus bezeichnet. Die Zentraleinheit 5 kann in einem der Steckplätze aufgenommen sein oder wie dargestellt auf andere Art mit dem Bus verbunden sein. Die Zentraleinheit 5 kommuniziert über den Bus mit den Baugruppen 3. Die Baugruppen 3 können über den Bus miteinander kommunizieren. Die Steckplätze 2 bzw. Baugruppen 3 sind parallel an die Busleitungen 4 angeschlossen, so dass durch einen Ausfall bzw. das Herausziehen einer Baugruppe 3 der Busverkehr zwischen den restlichen Baugruppen 3 und der Zentraleinheit 5 über die Busleitungen 4 nicht beeinträchtigt wird. Jedem der Steckplätze 2 ist eine innerhalb des Bussystems 1 eindeutige Adresse zugewiesen, über welche die in den Steckplätzen 2 aufgenommenen Baugruppen 3 jeweils ansprechbar sind. Um einer in einem Steckplatz befindlichen Baugruppe mitzuteilen, welche Adresse sie innerhalb des Bussystems 1 hat, gibt es gemäß dem Stand der Technik mehrere Lösungen, welche im Folgenden erläutert werden.

Zum einen ist üblich, über Adressschalter auf der Baugruppe oder eine Taufe der Baugruppe im Werk oder beim Kunden die Adresse einzustellen. Es ist möglich, auf der Baugruppe einen Adressschalter zu integrieren, mit welchem die Adresse manuell eingestellt werden kann. Die Baugruppe, z.B. eine digitale Ausgabebaugruppe, vergleicht die Adresse aus einem über den Bus versendeten Datenpaket mit der Adresse, die über den Schalter eingestellt ist. Stimmen beide Adressen überein, so erkennt die Baugruppe, dass das Datenpaket für sie bestimmt ist und kann darauf reagieren. Nachteilig an dieser Lösung ist insbesondere, dass ein Anwender die Adresse von Hand an jeder Baugruppe einstellen muss. Wird an zwei Baugruppen versehentlich die gleiche Adresse eingestellt, so funktioniert das gesamte Bussystem nicht mehr, weil eine Datenkollision auftritt. Ebenso führt es zu Fehlern, wenn bei der Baugruppe eine falsche Adresse eingestellt wird. Die Adresseinstellung von Hand ist somit fehlerträchtig und umständlich, da der Anwender bei einem Baugruppenwechsel die Adresse an der neuen Baugruppe von Hand einstellen muss und die neue Baugruppe nicht einfach in das Bussystem bzw. den Steckplatz hineinstecken kann. Statt des Adressschalters kann auch ein Speicher auf der Baugruppe integriert sein, in welchen der Anwender z.B. mittels eines Programmiergeräts eine Adresse hineinschreiben kann.

Eine weitere aus dem Stand der Technik bekannte Möglichkeit der Adressierung von Baugruppen bzw. Steckplätzen besteht darin, zu jedem Steckplatz eine zusätzliche Leitung zu führen. In diesem Fall kann die Zentraleinheit einer Baugruppe mit der jeweiligen Leitung anwählen und der Baugruppe mitteilen, welche Adresse sie bekommt. Danach kann die Zentraleinheit Datenpakete verschicken, weil die jeweilige Baugruppe ihre eigene Adresse kennt und damit selbst herausfinden kann, welche der versendeten Datenpakete für sie bestimmt sind. Nachteilig an dieser Lösung ist es, dass eine zusätzliche Leitung zu jedem Steckplatz geführt werden muss. Insbesondere bei einem System mit vielen Steckplätzen bedeutet das jedoch einen wesentlich erhöhten Hardwareaufwand. Zudem muss die Zentraleinheit vor Beginn des eigentlichen Datenverkehrs jede Baugruppe mittels der zusätzlichen Leitung selektieren und ihr jeweils die Adresse mitteilen, auf welche sie reagieren soll. Wird eine Baugruppe aus einem solchen Bussystem herausgenommen (z.B. weil sie defekt ist) und gegen eine neue Baugruppe ausgetauscht, so muss die Zentraleinheit erkennen, dass die Baugruppe gewechselt wurde und muss der neuen Baugruppe wiederum die Adresse übermitteln.

Eine weitere aus dem Stand der Technik bekannte Möglichkeit besteht darin, ein serielles Schieberegister zu verwenden. Die Zentraleinheit kann in diesem Fall Daten durch alle Baugruppen hindurch schieben. Dabei spricht sie zuerst alle Baugruppen über parallele Busleitungen an um ihnen mitzuteilen, dass sie in den Schieberegistermodus umschalten sollen. Die Baugruppen bilden dann zusammen ein großes Schieberegister mit z.B. 128 Bit Länge (z.B. 16 Baugruppen mit je 8 Bit Schieberegister). In diesem Fall schiebt die Zentraleinheit ein Datenpaket mit genau 128 Bit Länge über eine zusätzliche, durchgeschliffene Leitung durch die Baugruppen hindurch. In diesem Datenpaket sind die Baugruppenadressen derart angeordnet, dass nach dem Schieben um 128 Bit in jedem Schieberegister innerhalb einer Baugruppe genau die jeweilige Baugruppenadresse vorliegt. In einem nächsten Schritt kann die Zentraleinheit über die parallelen Busleitungen den Baugruppen mitteilen, dass sie den Schieberegisterinhalt auslesen und als Baugruppenadresse verwenden sollen. Damit ist den Baugruppen die eigene Adresse bekannt. Die Zentraleinheit kann daraufhin Datenpakete über die parallelen Busleitungen an die Baugruppen senden. Nachteilig an dieser Lösung ist neben der zusätzlichen Leitung, dass die Baugruppen ein Schieberegister integriert haben müssen sowie lückenlos aneinandergereiht sein müssen. Sobald ein Steckplatz nicht belegt ist, wird das baugruppenübergreifende Schieberegister unterbrochen. Die Zentraleinheit hat dann keine Möglichkeit, den Baugruppen, die nach der Lücke gesteckt sind, die Adresse zu übermitteln.

Bei einer weiteren aus dem Stand der Technik bekannten Lösung wird an jedem Steckplatz mit Pins eine Adresse fest eingestellt. Dafür werden zusätzliche Steckerpins benötigt. Bei 16 Steckplätzen sind z.B. 4 Steckerpins nötig, um jedem Steckplatz eine eindeutige Adresse zuzuordnen.

Das erfindungsgemäße Bussystem vermeidet die Nachteile der beschriebenen aus dem Stand der Technik bekannten Lösungen.

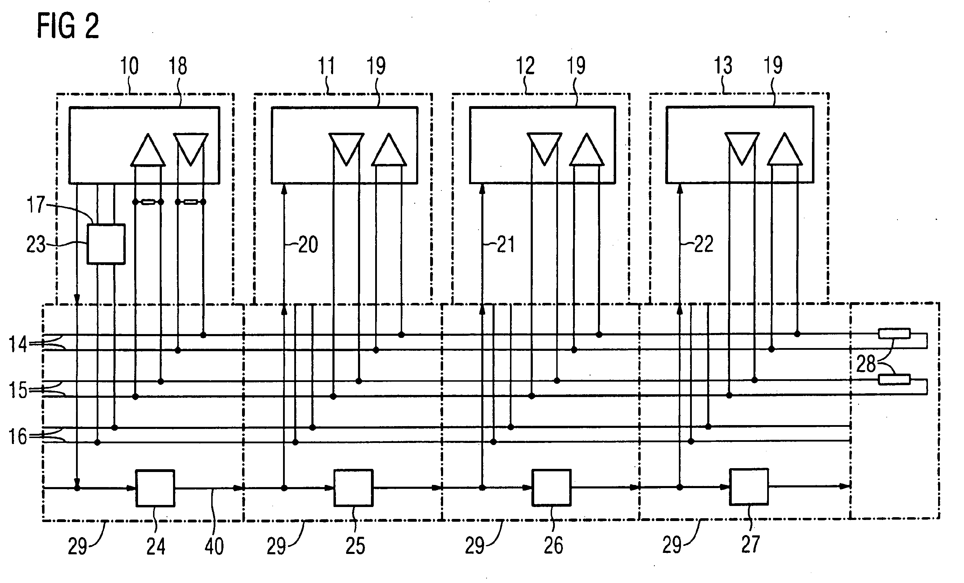

Figur 2 zeigt ein Bussystem, bei welchem das den Steckplätzen zugeführte Signal ein periodisches Signal ist. Das Bussystem gemäß Figur 2 weist so genannte Busmodule 29 auf, welche Steckplätze für Baugruppen 10 - 13 aufweisen. Die auf dem ersten Steckplatz aufgenommene Baugruppe 10 ist in diesem Fall eine Zentraleinheit. In den übrigen drei Steckplätzen befinden sich in diesem Fall Peripheriebaugruppen. Die Verbindung zwischen den einzelnen Steckplätzen wird mit den Busmodulen 29 hergestellt. Der Bus wird durch Busleitungen 14 - 16 gebildet. Dabei sind die Busleitungen 14 als so genannte Write-Leitungen, die Busleitungen 15 als so genannte Read-Leitungen und die Busleitungen 16 als Stromversorgungsleitungen ausgebildet. Die Busleitungen 14, 15 sind am physikalischen Busende jeweils durch einen Abschlusswiderstand 28 abgeschlossen. Die Stromversorgungsleitungen 16 werden über eine Stromversorgung 17 der Zentraleinheit 10 gespeist. Die Baugruppen 10 - 13 weisen jeweils eine anwenderspezifisch integrierte Schaltung, den so genannten Bus-ASIC 18, 19 auf, welcher die Kommunikation der Baugruppen 10 - 13 über die Busleitungen 14, 15 abwickelt.

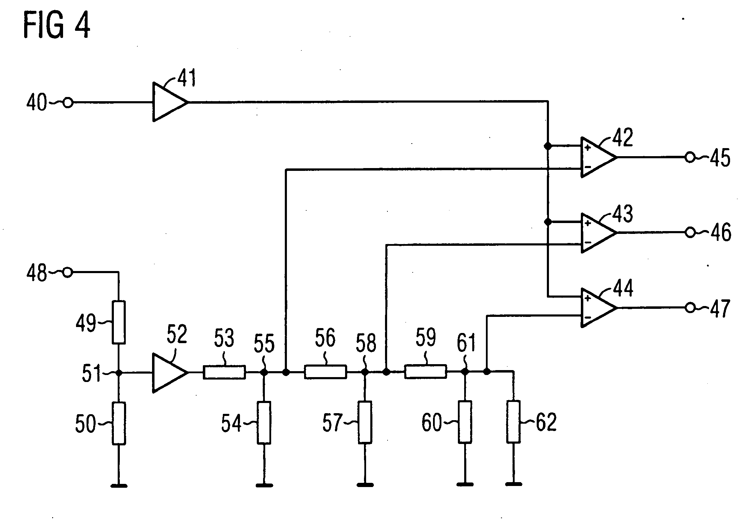

Gemäß dem Ausführungsbeispiel nach Figur 2 wird eine zusätzliche Leitung 40 in das Bussystem eingebracht. In diese Leitung 40 speist die Zentraleinheit ein periodisches Rechtecksignal mit einer bekannten Frequenz 23 (z.B. 24 MHz) ein. Die Frequenz des Rechtecksignals wird auch Taktfrequenz genannt. Auf der Backplane bzw. in den Busmodulen 29 wird die Taktfrequenz durch Frequenzteiler 24 - 27 heruntergeteilt. Gemäß dem Ausführungsbeispiel wird die Taktfrequenz an jedem Steckplatz auf die Hälfte heruntergeteilt. Die Baugruppen 11 - 13 greifen den Takt 20 - 22 am jeweiligen Steckplatz ab. Anhand der Frequenz erkennen die Baugruppen 11 - 13, auf welchem Steckplatz sie sich befinden. Beispielsweise speist die Zentraleinheit 10 am ersten Steckplatz ein Signal mit einer Frequenz von 24 MHz ein. Am darauffolgenden Steckplatz beträgt die Frequenz des Signals 12.000 kHz, am nächsten Steckplatz 6.000 kHz, usw. Wird eine Baugruppe 11 - 13 in das Bussystem gesteckt, so misst sie die Taktfrequenz 20 - 22. Anhand der Taktfrequenz 20 - 22 erkennt sie den Steckplatz. Die Zuordnung zwischen dem Wert der physikalischen Größe des Signals, in diesem Fall der Frequenz des Signals, und der jeweiligen Adresse ist der Baugruppe bekannt oder erfolgt durch eine geeignete Schaltungsanordnung zur Einstellung der Adresse automatisch (siehe Ausführungsbeispiel gemäß FIG 4). Die Schaltung ermöglicht es den Baugruppen 11 - 13 somit, ihren Steckplatz selbstständig zu erkennen. Durch die eindeutige Zuordnung einer Adresse zu jedem Steckplatz und durch die eindeutige Zuordnung der Adresse zu einem Frequenzwert ist der am jeweiligen Steckplatz aufgenommenen Baugruppe somit eine selbstständige Adresseinstellung ermöglicht. Im Unterschied zum Stand der Technik muss somit weder eine manuelle Adresseinstellung erfolgen, noch müssen in der Zentraleinheit Softwaremechanismen zur Adressübertragung in die Baugruppe 11 - 13 ablaufen. Lediglich eine zusätzliche Leitung 40 innerhalb des Bussystems ist notwendig. Die Eigenstromaufnahme der vorgeschlagenen Schaltungsanordnung ist sehr gering und die Schaltung ist kostengünstig herzustellen.

Das durch eine an dem jeweiligen Steckplatz 2 aufgenommene Baugruppe 3 abgreifbare elektrische Signal kann ein beliebiges anderes periodisches Signal sein, z. B. ein Sinus- oder Dreiecksignal. Das Signal kann auch ein Pulsfolgesignal sein. Ein pulsweitenmoduliertes Signal könnte derart ausgewertet werden, dass die Pulsweite der Pulse als physikalische Größe des Signals einer Adresse des jeweiligen Steckplatzes eindeutig zuzuordnen ist.

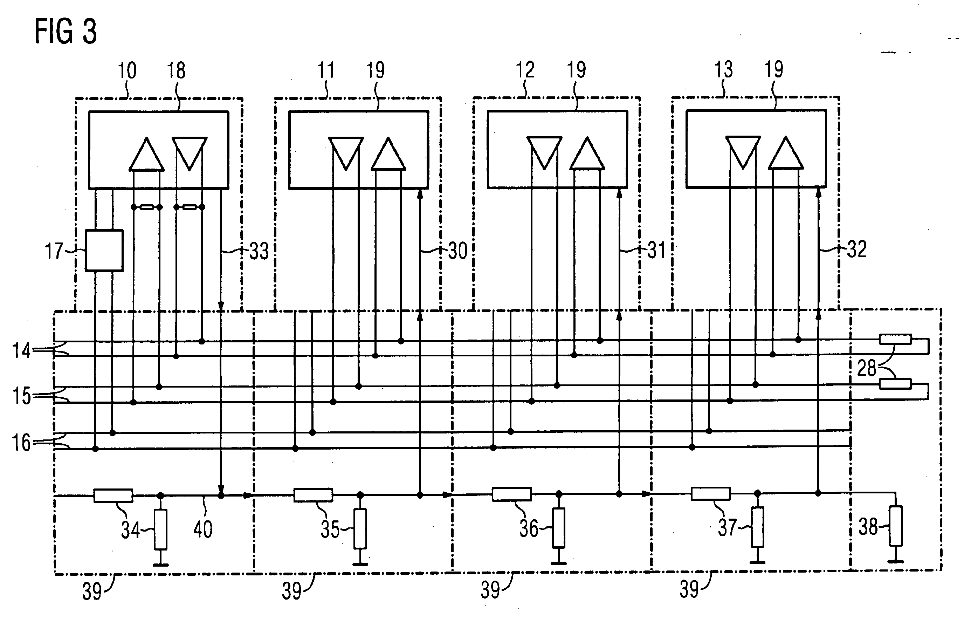

Neben der Beschreibung der Generierung der Steckplatzadressen durch Frequenzteilung und der Steckplatzdetektion anhand der Frequenz eines Signals wird im Folgenden anhand des Ausführungsbeispiels gemäß Figur 3 die Generierung der Steckplatzadressen durch Spannungsteilung und die Steckplatzdetektion anhand der Spannungshöhe eines Signals genauer beschrieben. Dabei bezeichnen gleiche Bezugszeichen wie in Figur 2 Komponenten mit gleicher Funktion. Es ist wiederum eine zusätzliche Leitung 40 im Bussystem vorgesehen, in welche in diesem Fall die Zentraleinheit 10 ein Signal 33 mit einer bekannten, festen Spannung einspeist (z.B. mit der Versorgungsspannung von 5 Volt). Mit Spannungsteilern 34 - 38 wird die Spannung an jedem Steckplatz auf die Hälfte heruntergeteilt. Die Baugruppen 11 - 13 greifen ein Signal 30 - 32 mit einer jeweiligen Spannung am jeweiligen Steckplatz ab. Anhand der Spannung des Signals 30 - 32 erkennen die Baugruppen 11 - 13, auf welchem Steckplatz sie sich befinden. Wird eine Baugruppe in das Bussystem gesteckt, so misst sie die Spannung des Signals, welches sie an dem Steckplatz abgreifen kann. Anhand der Spannung erkennt sie den Steckplatz. Die Spannungsmessung auf den Baugruppen 11 - 13 kann über verschiedene Methoden realisiert werden. So kann eine Messung der analogen Spannung über Analogwandler-Bausteine erfolgen. Wie in Figur 3 dargestellt, kann die Spannung auch mittels eines Spannungsteilernetzwerkes aus Widerständen mit nachgeschalteten Komparatoren, z.B. integriert in einen Bus-ASIC, bestimmt werden. Eine solche Schaltungsanordnung ermöglicht es den Baugruppen somit, ihren Steckplatz selbstständig zu erkennen. Im Unterschied zum Stand der Technik muss weder eine manuelle Adresseinstellung auf der Baugruppe erfolgen, noch müssen in der Zentraleinheit des Bussystems Softwaremechanismen zur Adressübertragung in die Baugruppe 11 - 13 ablaufen. Die Eigenstromaufnahme einer solchen Schaltung ist sehr gering. Ein weiterer Vorteil ist, dass im Busmodul 39 keine aktiven Elektronikbauteile erforderlich sind.

Um zu erreichen, dass die Spannung an jedem Steckplatz gegenüber dem vorhergehenden Steckplatz halbiert ist, sind die Werte der Widerstände 34 - 38 gemäß Figur 3 so zu wählen, dass die gegen Masse geschalteten Widerstände jeweils den doppelten Widerstandswert gegenüber den in Serie geschalteten Widerständen aufweisen.

Eine mögliche Realisierung der Spannungsmessung innerhalb eines ASIC zeigt die Schaltungsanordnung gemäß Figur 4. Figur 4 zeigt die ASIC-Innenschaltung für die Erkennung von drei Steckplätzen. Für die Erkennung von mehr Steckplätzen müssten entsprechend mehr Spannungsteiler und Komparatoren eingebracht werden. Gemäß dem dargestellten Ausführungsbeispiel wird im Punkt 48 eine Versorgungsspannung von 5 Volt eingespeist. Am Punkt 40 liegt gemäß dem Ausführungsbeispiel eine Spannung von 1,25 Volt an, welches die Spannung des Gleichspannungssignals ist, welches die Baugruppe an ihrem Steckplatz abgreift. Mit dem Komparator 41 wird erreicht, dass die Spannung an dem Punkt 40 sehr hochohmig erfasst wird und somit nicht durch die interne Schaltung verfälscht wird. Die Spannung an dem Punkt 40 stammt aus dem Spannungsteiler an den Busmodulen. Die am Punkt 48 anliegende Spannung ist die Versorgungsspannung der Baugruppe. Sie wird über den Spannungsteiler aus dem Widerstand 49 und dem Widerstand 50, welcher den dreifachen Widerstandswert im Vergleich zum Widerstand 49 aufweist, derart heruntergeteilt, dass an dem Punkt 51 eine Spannung von 3,75 Volt anliegt. Diese heruntergeteilte Spannung wird über den Spannungsfolger 52 auf die Spannungsteilerwiderstände 53, 54, 56, 57, 59, 60, 62 geführt. Die Widerstände 53, 56, 59 weisen jeweils den halben Widerstandswert im Vergleich zu den Widerständen 54, 57, 60, 62 auf. Aufgrund dieser Dimensionierung der Widerstände ergibt sich jeweils eine Halbierung der Spannung an den Punkten 55, 58 und 61. Mit den Komparatoren 42 - 44 werden die Spannungen verglichen. Gemäß dem Ausführungsbeispiel nach Figur 4 liefert der Komparator 42 Lowpegel (1,25 Volt am P-Eingang, 1,88 Volt am N-Eingang). Der Komparator 43 liefert Highpegel (1,25 Volt am P-Eingang, 0,94 Volt am N-Eingang). Der Komparator 44 liefert Highpegel (1,25 Volt am P-Eingang, 0,47 Volt am N-Eingang). Anhand der Komparatorausgänge 45 - 47 kann durch die Baugruppe festgestellt werden, auf welchem Steckplatz sich die Baugruppe befindet.

Im Bus-ASIC sollte nicht genau der gleiche Spannungsteiler wie in den Busmodulen verwendet werden, da sich sonst an den Knotenpunkten jeweils etwa die gleiche Spannung einstellt. Die Komparatoren 42 - 44 könnten dann den Steckplatz nicht sicher erkennen, da das Ausgangssignal der Komparatorstufe jeweils lediglich von Bauteiltoleranzen abhängt. Dies wird vermieden, wenn, wie im dargestellten Fall, die Widerstandskette im ASIC nicht genauso gestaltet wird wie der Spannungsteiler im Busmodul. Im dargestellten Fall wird der Widerstandskette im ASIC ein zusätzlicher Spannungsteiler aus den Widerständen, 49, 50 vorgeschaltet. Damit werden die Spannungen an den Knotenpunkten 55, 58, 61 im Spannungsteilernetzwerk des ASIC so eingestellt, dass sie genau zwischen den Spannungen auf den Busmodulen liegend. Damit ist sichergestellt, dass trotz Bauteiltoleranzen die Spannungen am jeweiligen Komparator 42 - 44 sicher unterschieden werden können. Optimal ist es, wenn die Eingangsspannung am Bus-ASIC nur das 0,75-fache der Spannung des Busmoduls beträgt. Am ASIC-Eingang wird deshalb ein zusätzlicher Spannungsteiler eingebracht. Widerstände und Komparatoren lassen sich leicht in einen ASIC integrieren.

Zusammengefasst betrifft die Erfindung somit ein Bussystem 1 mit Steckplätzen 2 zur Aufnahme von Baugruppen 3. Es wird vorgeschlagen, dass zur einfachen, automatischen Zuordnung von jeweils einer Adresse zu einem Steckplatz 2 den Steckplätzen 2 ein durch eine an dem jeweiligen Steckplatz 2 aufgenommene Baugruppe 3 abgreifbares elektrisches Signal zuführbar ist, wobei aus dem Wert einer physikalischen Größe des Signals eine Adresse des jeweiligen Steckplatzes 2 eindeutig ermittelbar ist. Die Erfindung betrifft zudem eine Baugruppe 3, die zur Aufnahme an mindestens einem der Steckplätze 2 eines solchen Bussystems 1 geeignet ist, wobei die Baugruppe 3 Auswertemittel zur Auswertung des Werts der physikalischen Größe des Signals und zur Zuordnung einer Adresse in Abhängigkeit vom Ergebnis der Auswertung des Werts aufweist.

## Patentansprüche

1. Bussystem (1) mit Steckplätzen (2) zur Aufnahme von Baugruppen (3), wobei zur Zuordnung von jeweils einer Adresse zu einem Steckplatz (2) den Steckplätzen (2) ein durch eine an dem jeweiligen Steckplatz (2) aufgenommene Baugruppe (3) abgreifbares elektrisches Signal zuführbar ist, wobei aus dem Wert einer physikalischen Größe des Signals eine Adresse des jeweiligen Steckplatzes (2) eindeutig ermittelbar ist,
**dadurch gekennzeichnet,**
**dass** das Signal ein periodisches Signal ist und die physikalische Größe die Frequenz des Signals ist, wobei das Signal derart zuführbar ist, dass die Frequenz des Signals an jedem Steckplatz (2) ein unterschiedlicher Quotient einer Grundfrequenz ist.

2. Bussystem nach Anspruch 1,
**dadurch gekennzeichnet,**
**dass** die Steckplätze (2) parallel an Busleitungen (4) angeschlossen sind.

3. Bussystem nach Anspruch 1 oder 2,
**dadurch gekennzeichnet,**
**dass** das Signal über eine zusätzliche Leitung (40) den Steckplätzen (2) zuführbar ist.

4. Bussystem nach einem der vorhergehenden Ansprüche,
**dadurch gekennzeichnet,**
**dass** das Signal derart zuführbar ist, dass der Wert der physikalischen Größe des Signals an jedem Steckplatz (2) unterschiedlich ist.

5. Bussystem nach einem der vorhergehenden Ansprüche,
**dadurch gekennzeichnet,**
**dass** das periodische Signal ein Rechtecksignal ist.

6. Bussystem nach einem der vorhergehenden Ansprüche,
**dadurch gekennzeichnet,**
**dass** die Frequenz an jedem Steckplatz (2) bezüglich der Frequenz an einem vorhergehenden Steckplatz (2) in einem bestimmten Verhältnis, insbesondere auf die Hälfte, geteilt ist.

7. Baugruppe (3), die zur Aufnahme an mindestens einem der Steckplätze (2) eines Bussystems (1) nach einem der vorhergehenden Ansprüche geeignet ist, wobei die Baugruppe (3) Auswertemittel zur Auswertung des Werts der physikalischen Größe des Signals und zur Zuordnung einer Adresse in Abhängigkeit vom Ergebnis der Auswertung des Werts aufweist,
**dadurch gekennzeichnet,**
**dass** die Auswertemittel zur Auswertung der Frequenz des Signals vorgesehen sind.

8. Baugruppe nach Anspruch 7,
**dadurch gekennzeichnet,**
**dass** die Auswertemittel als anwenderspezifisch integrierte Schaltung ausgeführt sind.

9. Speicherprogrammierbare Steuerung mit einem Bussystem nach einem der Ansprüche 1 bis 6.

10. Automatisierungssystem, insbesondere industrielles Automatisierungssystem, mit einer speicherprogrammierbaren Steuerung nach Anspruch 9.

## Claims

1. Bus system (1) with slots (2) for receiving assemblies (3), it being possible to supply the slots (2) with an electrical signal, which can be tapped by an assembly (3) received at the respective slot (2), for allocating a respective address to a slot (2), it being possible to determine an address of the respective slot (2) uniquely from the value of a physical variable of the signal, **characterised in that** the signal is a periodic signal and the physical variable is the frequency of the signal, it being possible to supply the signal in such a way that the frequency of the signal at each slot (2) is a different quotient of a basic frequency.

2. Bus system according to claim 1, **characterised in that** the slots (2) are connected in parallel to bus lines (4).

3. Bus system according to claim 1 or 2, **characterised in that** the signal can be supplied to the slots (2) via an additional line (40).

4. Bus system according to any one of the preceding claims, **characterised in that** the signal can be supplied in such a way that the value of the physical variable of the signal is different at each slot (2).

5. Bus system according to any one of the preceding claims, **characterised in that** the periodic signal is a square wave signal.

6. Bus system according to any one of the preceding claims, **characterised in that**, with respect to the frequency at a preceding slot (2), the frequency at each slot (2) is divided in a specific ratio, in particular in half.

7. Assembly (3) which is capable of being received in at least one of the slots (2) of a bus system (1) according to any one of the preceding claims, the assembly (3) comprising evaluation means for evaluating the value of the physical variable of the signal and for allocating an address as a function of the result of evaluation of the value, **characterised in that** the evaluation means are provided for evaluating the frequency of the signal.

8. Assembly according to claim 7, **characterised in that** the evaluation means are implemented as an application-specific integrated circuit.

9. Stored program control with a bus system according to any one of claims 1 to 6.

10. Automation system, in particular industrial automation system, comprising a stored program control according to claim 9.

## Revendications

1. Système de bus (1) avec des emplacements (2) pour recevoir des cartes (3), dans lequel, pour associer à chaque fois une adresse à un emplacement (2), un signal électrique pouvant être prélevé par une carte (3) reçue dans l'emplacement respectif (2) peut être envoyé aux emplacements (2) et dans lequel, à partir de la valeur d'une grandeur physique du signal, une adresse de l'emplacement respectif (2) peut être déterminée sans équivoque,
**caractérisé par le fait que** le signal est un signal périodique et que la grandeur physique est la fréquence du signal, le signal pouvant être envoyé de telle sorte que la fréquence du signal à chaque emplacement (2) est un quotient différent d'une certaine fréquence fondamentale.

2. Système de bus selon la revendication 1,
**caractérisé par le fait que** les emplacements (2) sont raccordés en parallèle à des lignes de bus (4).

3. Système de bus selon la revendication 1 ou 2,
**caractérisé par le fait que** le signal peut être envoyé aux emplacements (2) par l'intermédiaire d'une ligne supplémentaire (40).

4. Système de bus selon l'une des revendications précédentes,
**caractérisé par le fait que** le signal peut être envoyé de telle sorte que la valeur de la grandeur physique du signal est différente à chaque emplacement (2).

5. Système de bus selon l'une des revendications précédentes,
**caractérisé par le fait que** le signal périodique est un signal rectangulaire.

6. Système de bus selon l'une des revendications précédentes,
**caractérisé par le fait que** la fréquence à chaque emplacement (2) est divisée selon un certain rapport, notamment la moitié, par rapport à la fréquence à un emplacement (2) précédent.

7. Carte (3), qui peut être reçue dans au moins l'un des emplacements (2) d'un système de bus (1) selon l'une des revendications précédentes, la carte (3) comportant des moyens d'évaluation pour évaluer la valeur de la grandeur physique du signal et pour associer une adresse en fonction du résultat de l'évaluation de la valeur,
**caractérisée par le fait que** les moyens d'évaluation sont prévus pour l'évaluation de la fréquence du signal.

8. Carte selon la revendication 7,
**caractérisée par le fait que** les moyens d'évaluation sont réalisés sous forme de circuit intégré spécifique à l'application.

9. Commande par programme enregistré avec un système de bus selon l'une des revendications 1 à 6.

10. Système d'automatisation, notamment système d'automatisation industriel, avec une commande par programme enregistré selon la revendication 9.
